# EUROPEAN PATENT APPLICATION

(11) **EP 2 037 522 A1**
(43) Date of publication of application: **18.03.2009**
(21) Application number: 07742504.9
(22) Date of filing: 26.04.2007
(51) Int. Cl.: H01M 8/04, H01M 8/00, H01M 8/10, H02J 7/00

(54) **CHARGER**

(30) Priority: 09.05.2006 JP 2006130270; 27.06.2006 JP 2006176949
(71) Applicant: Aquafairy Corporation, Nishikyo-ku Kyoto-shi Kyoto 615-8245 (JP)
(72) Inventor: YANO, Masaya, Kyoto-shi Kyoto 615-8245 (JP); SUGIMOTO, Masakazu, Kyoto-shi Kyoto 615-8245 (JP); SUGITA, Taiichi, Kyoto-shi Kyoto 615-8245 (JP)
(74) Representative: Sajda, Wolf E.
(86) International application number: PCT/JP2007/059069
(87) International publication number: WO 2007/129594

(57) **Abstract**

A charger which can charge a secondary battery suitably with a simple device without particularly requiring fuel supply control, and in which overload to a fuel cell is hard to occur. The charger comprises fuel supply means (10), a fuel cell (FC) which is supplied with fuel from the fuel supply means (10) to generate and output electricity, a DC voltage conversion circuit (20) for converting the output voltage from the fuel cell (FC) into a predetermined voltage and outputting the converted voltage, an output section (30) connected electrically with one output from the DC voltage conversion circuit (20) in order to output power for charging, a current control circuit (40) interposed between the other output from the DC voltage conversion circuit (20) and the output section (30) and controlling the output current from the output section (30) so as not to exceed a predetermined current value, and set current alteration means (60) for varying the set current value of the current control circuit (40) such that the variation pattern of fuel consumption approaches the variation pattern of fuel supply to the fuel cell (FC),

## Description

### TECHNICAL FIELD

The present invention relates to a charger for charging a secondary battery and the like using a fuel cell that generates electricity by being supplied with fuel such as hydrogen gas and the like, in particular, to a technique of preventing an overload from occurring in the fuel cell during charging.

### BACKGROUND ART

The fuel cell using solid polymer electrolyte has high energy conversion efficiency and is thin, compact, and light weight, and thus is actively developed for household cogeneration systems and automobiles.

With activation in recent IT technology, mobile equipments such as portable telephone, laptop, and digital camera are being frequently used, and the power consumption tends to increase with higher function of such mobile equipments. Thus, development for increasing battery capacity is also being actively carried out on lithium ion secondary batteries mainly used as their power supply.

However, the battery capacity of the lithium ion secondary battery is theoretically limited, and thus development in a portable charger using a fuel cell is also advancing. For instance, Patent Document 1 discloses a charger of a portable telephone that uses a direct methanol fuel cell and that performs temperature control to stably operate the fuel cell. However, in a charger using the direct methanol fuel cell, the battery output with respect to fuel is not sufficient, and output shortage may occur in rapid charging.

Patent Document 2 discloses a portable charger that uses a fuel cell which generates electricity by hydrogen gas, stores the hydrogen gas generated by electrolysis of water, and charges a secondary battery with the electricity generated by supplying the hydrogen gas to the fuel cell.

In such a charger, however, a complicating control device is necessary to accurately supply the hydrogen gas in accordance with the amount of hydrogen gas necessary in generating electricity during charging. Unless such a control device is used, the residual hydrogen gas may be discharged from the fuel cell, and an exhaust gas treatment becomes necessary.

As a technique of efficiently performing the charging control of the secondary battery using the fuel cell, Patent Document 3 discloses a charger provided with a charger circuit for performing a constant current charging until the secondary battery reaches a predetermined voltage value, and switching to a constant voltage charging when reaching the predetermined voltage value and performing charging. In such a charger, the charging current of the secondary battery is made constant at the initial stage of charging, and thus an overcurrent does not occur in the secondary battery, and the durability of charging/discharging of the secondary battery is enhanced.

However, in such a charger circuit of the charger, the charging current is controlled to be constant, and thus an excess amount of fuel needs to be discharged for the fuel consumption to be constant in a system in which the fuel supply to the fuel cell varies, and the usage efficiency of the fuel may lower.

The charger circuit of the secondary battery is generally arranged inside in the portable equipment capable of incorporating the secondary battery and externally charging the same, but since input of constant voltage/constant current is expected as in AC adapter, the fuel cell may be damaged when an overcurrent occurs at the initial stage of charging when directly connecting the output of the fuel cell.

Patent Document 1: Japanese Laid-Open Patent Publication JP-A-2004-194 434
Patent Document 2: Japanese Laid-Open Patent Publication JP-A-2004-056 985
Patent Document 3: Japanese Laid-Open Patent Publication JP-A-2005-295 705.

### DISCLOSURE OF THE INVENTION

### PROBLEMS TO BE SOLVED BY THE INVENTION

It is an object of the present invention to provide a charger which can charge a secondary battery suitably with a simple device without particularly requiring fuel supply control, and in which the usage efficiency of fuel is high and the overload to fuel cell is hard to occur.

The above-described object can be attained according to the following present invention.
The charger of the present invention includes fuel supply means for supplying fuel; a fuel cell for generating and outputting electricity by the fuel supplied from the fuel supply means; a DC voltage conversion circuit for converting an output voltage of the fuel cell to a predetermined voltage, and outputting the converted voltage; an output section connected electrically with an output of the DC voltage conversion circuit to output power for charging; current control means for controlling an output current from the output section or the fuel cell so as not to exceed a set current value; and set current alteration means for varying the set current value of the current control means such that a variation pattern of fuel consumption approaches a variation pattern of fuel supply to the fuel cell.

According to the charger of the present invention, the battery output requested on the fuel cell is less likely to become an excess since the charging current is controlled to smaller than or equal to a set value by a current control means, and thus an overload on the fuel cell is less likely to occur in the initial stage of charging, and the secondary battery can be suitably charged. Furthermore, since a set current alteration means for varying the set current value of the current control means in accordance with the variation pattern of the fuel supply is arranged, even if the fuel supply to the fuel cell varies, the set current value can be varied and the fuel consumption can be varied so as to approach the fuel supply, and thus excessive fuel discharge can be reduced.
The necessity to control the fuel supply to the fuel cell is thus lowered, and the troublesome control operation and the complicated control mechanism become unnecessary. As a result, a charger with high fuel usage efficiency in which the fuel supply does not need to be particularly controlled, the secondary battery can be suitably charged with a simple device, and overload on the fuel cell is less likely to occur is achieved.

The charger of the present invention includes fuel supply means for supplying fuel; a fuel cell for generating and outputting electricity by the fuel supplied from the fuel supply means; a DC voltage conversion circuit for converting an output voltage of the fuel cell to a predetermined voltage, and outputting the converted voltage; an output section connected electrically with one output of the DC voltage conversion circuit to output power for charging; a current control circuit, interposed between the other output of the DC voltage conversion circuit and the output section, for controlling an output current from the output section so as not to exceed a set current value; anda set current alteration means for varying the set current value of the current control means such that a variation pattern of fuel consumption approaches a variation pattern of fuel supply to the fuel cell.

According to the charger of the present invention, since the charging amount is controlled to smaller than or equal to the set value by the current control circuit while maintaining the charging voltage with the DC voltage conversion circuit, the battery output requested on the fuel is less likely to become an excess, the overload on the fuel cell is less likely to occur at the initial stage of charging, and the secondary battery can be suitably charged by a stable charging voltage/charging current.
Furthermore, since the set current alteration means for varying the set current value of the current control means in accordance with the variation pattern of the fuel supply are arranged, even if the fuel supply to the fuel cell varies, the set current value can be varied and the fuel consumption can be varied so as to approach the fuel supply, and thus excessive fuel discharge can be reduced.
The necessity to control the fuel supply to the fuel cell is thus lowered, and the troublesome control operation and the complicated control mechanism become unnecessary. As a result, a charger with high fuel usage efficiency in which the fuel supply does not need to be particularly controlled, the secondary battery can be suitably charged with a simple device, and overload on the fuel cell is less likely to occur is achieved.

In the description above, the set current alteration means preferably vary the set current value of the current control circuit based on the variation pattern of the current value that varies with time determined in advance. The variation pattern of the fuel supply to the fuel cell is predictable, and thus the variation pattern of the current value can be determined beforehand in accordance therewith. Thus, even if the fuel supply to the fuel cell varies, the set current value can be varied and the fuel consumption can be varied so as to approach the fuel supply, and thus excessive fuel discharge can be reduced by arranging the set current alteration means for varying the set current value of the current control circuit based on the variation pattern.

A fuel cell used in the present invention preferably has a plurality of unit cells electrically connected in series and passages for the fuel supplied from the fuel supply means connected in series; and the set current alteration means include a first voltage detection unit for detecting a first voltage of a unit cell of a final stage positioned at a most downstream side of the fuel passage, a second voltage detection unit for detecting a second voltage of the remaining unit cells other than the unit cell of the final stage, a first voltage variation detection unit for detecting temporal variation of the first voltage, a second voltage variation detection unit for detecting temporal variation of the second voltage, and a set value determination unit for determining the set current vale of the current control means or the current control circuit based on a degree of the temporal variations of the first voltage and the second voltage.

When supplying fuel to the fuel cell, the fuel is first supplied to the unit cell positioned on the upstream side, and then supplied to the unit cells positioned on the downstream side in order. In this case, the phenomenon of lack of fuel tends to easily occur at the unit cell of the final stage positioned on the most downstream side. Thus, a plurality of unit cells configuring the fuel cell is divided into the unit cell of the final stage and other unit cells (group), and a first voltage of the unit cell of the final stage and a second voltage of the remaining unit cells are separately detected.
The temporal variations of the first voltage and the second voltage are then detected. The variation degree of the fuel supply to the fuel cell can be monitored by detecting the temporal variations, and in particular, the variation degree can be monitored with satisfactory precision by specifically detecting the variation degree of the first voltage. The set current value is determined based on such a temporal variation, and thus can flexibly follow and respond to the fuel consumption, and excessive fuel discharge can be reduced. The second voltage may be an average voltage or may be a total voltage if the unit cells other than the unit cell of the final stage exist in plurals.

In the set current alteration means for detecting temporal variation as described above, the first voltage, the second voltage, and the temporal variations thereof are preferably provided so that detection is carried out by a predetermined sampling period, the first and second voltage variation detection units detect a degree of downward trend and a degree of upward trend of the voltage value from a current voltage value and voltage values at a plurality of past sampling points, and the set value determination unit determines an adjustment value with respect to the current set current value according to an extent of the degree.

According to such a configuration, the temporal variations of the first and second voltages are monitored based on a predetermined sampling period. With respect to the degree of temporal variation, whether the variation of the current voltage value is on a downward trend or on an upward trend, and the degree thereof are detected from the voltage value at the current sampling point and the voltage value at a plurality of past sampling points. A method of calculating such a degree includes a method of evaluating as +1 if increasing with respect to the voltage value of the previous sampling point, -1 if decreasing, and 0 if the same.
The method, however, is not limited thereto. An adjustment value with respect to the current set current value is determined based on the degree of increase or decrease. For instance, the adjustment value is determined to be large if the degree of increase or decrease is large. The follow-up to the fuel consumption is thus performed at satisfactory precision.

To determine the adjustment value in the present invention, a function setting unit for setting a function for determining the adjustment value is preferably comprised, wherein the function determines the adjustment value with the current set current value as an input variable.

A function is set to determine the adjustment value, where an appropriate adjustment value corresponding to the magnitude of the current set current value can be determined. For instance, the adjustment value becomes larger the smaller the current set current value. The function may be set in a form of, for instance, a table.

The current control circuit preferably includes a current control element connected in series between the other output of the DC voltage conversion circuit and the output section, compares the detection voltage that varies according to the current flowing to the current control element and a reference voltage that becomes a reference, and controls the current flowing to the current control element to smaller than or equal to a set current value by an input signal corresponding to a voltage difference.

According to such a current control circuit, the output current of the output section for charging can be reliably detected as a voltage, and the current flowing to the current control element can be reliably controlled to smaller than or equal to the set current value by an input signal corresponding to the voltage difference with the reference voltage. As a result, the output current from the output section can be reliably controlled so as not to exceed a predetermined current value.

The current control means preferably detect the current on an input side or an output side of the DC voltage conversion circuit, and input the detected current to a voltage adjustment feedback input of the DC voltage conversion circuit to control the output current from the output section so as not to exceed the set current value.

According to such a configuration, the output current of the DC voltage conversion circuit can be controlled by the current control means, and thus excessive boost is no longer necessary, whereby the energy loss reduces and the charging efficiency enhances compared to when the current control circuit is arranged at a post-stage of the DC voltage conversion circuit.

The fuel supply means preferably supply hydrogen gas as fuel, and the fuel cell generates electricity by hydrogen gas and lowers the hydrogen gas consumption when the output current lowers.

If such a fuel cell is used, even if the output current requested on the fuel cell lowers when the charging current of the output section is lowered at the last stage of charging, it can be automatically responded without performing the fuel supply control as the consumption of hydrogen gas is lowered.

### BRIEF DESCRIPTION OF THE DRAWINGS

- Fig. 1: is a schematic configuration view showing one example of a charger of the present invention;
- Fig. 2: is a circuit diagram showing one example of a current control circuit used in the charger of the present invention;
- Fig. 3: is an assembly perspective view showing one example of a unit cell used in the charger of the present invention;
- Fig. 4: is a longitudinal cross-sectional view showing one example of the unit cell used in the charger of the present invention;
- Fig. 5: is a graph showing change over time of voltage, current, and output of each part in an example, and a graph showing change over time of hydrogen supply and hydrogen consumption;
- Fig. 6: is a graph showing change over time of the total hydrogen supply and the total hydrogen consumption in an Example and a Comparative Example;
- Fig. 7: is a frame format view showing a configuration of another embodiment of set current alteration means;
- Fig. 8: is a graph showing change over time of the output and the instantaneous consumption;
- Fig. 9: is a graph showing change over time of the output capacity and the hydrogen consumption;
- Fig. 10: is a schematic configuration view showing another example of a charger of the present invention; and
- Fig. 11: is a schematic configuration view showing another example of a charger of the present invention.

### DESCRIPTION OF REFERENCE SIGNS

- 1: solid polymer electrolyte
- 2: cathode side electrode plate
- 3: anode side electrode plate
- 4: cathode side metal plate
- 5: anode side metal plate
- 10: fuel supply means
- 11: hydrogen generating agent
- 20: DC voltage conversion circuit
- 30: output section
- 40: current control circuit
- 41: current control element
- 60: set current alteration means
- 61: first voltage detection unit
- 62: second voltage detection unit
- 64: first voltage variation detection unit
- 65: second voltage variation detection unit
- 66: set value determination unit
- 67: function setting unit
- 70: current detection unit
- 71: current detection element
- 80: output current control means
- FC: fuel cell
- S1, S2, S3, S4: unit cell

### BEST MODE FOR CARRYING OUT THE INVENTION

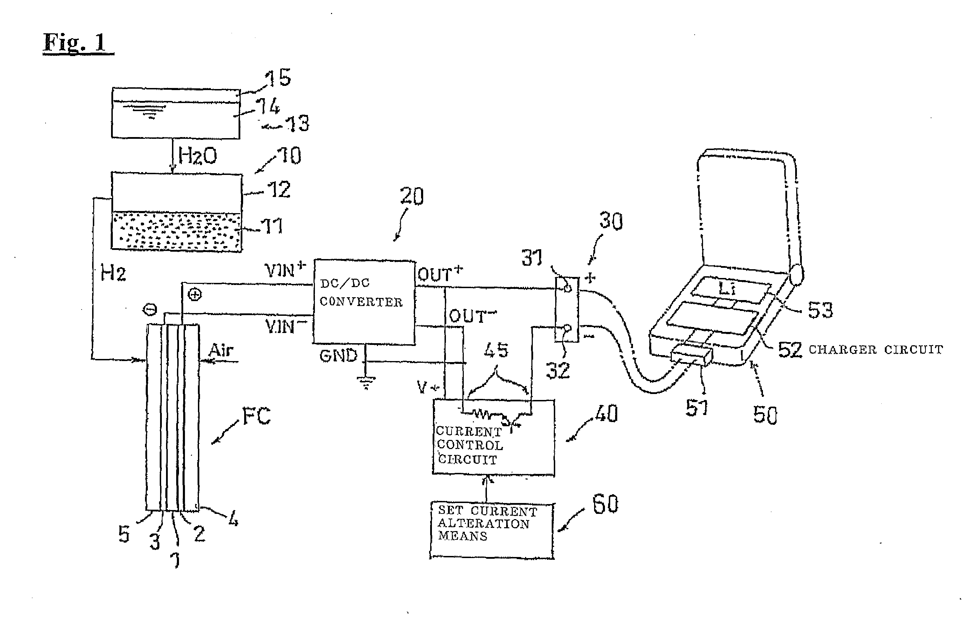

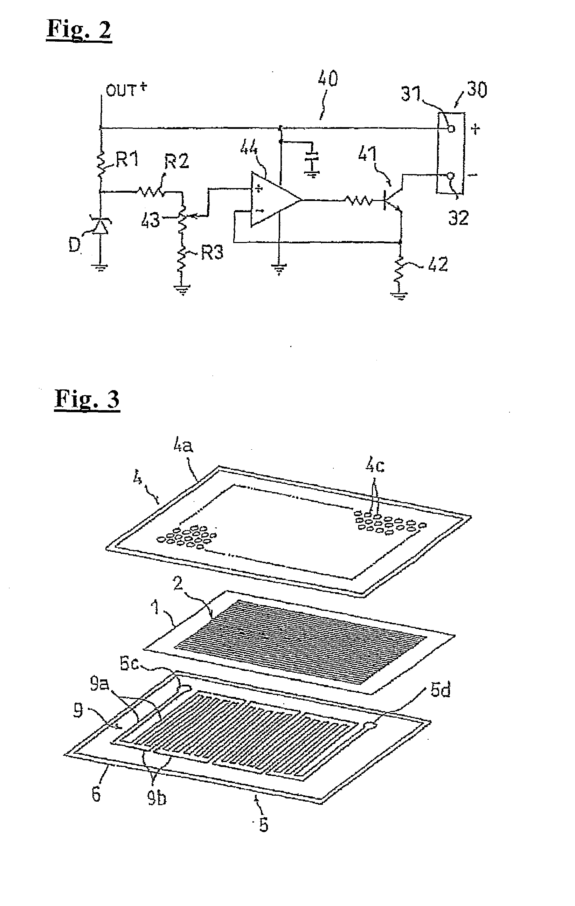

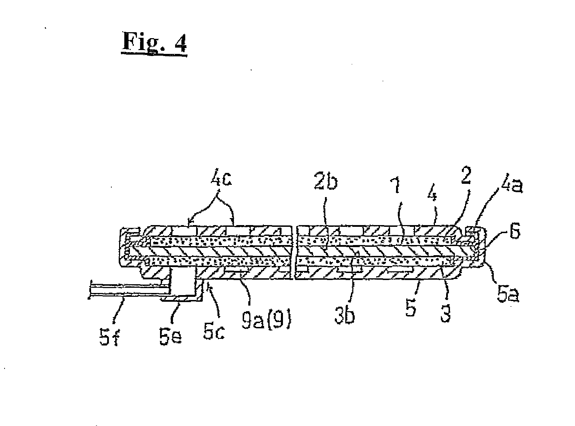

Embodiments of the present invention will be described with reference to the drawings. Fig. 1 is a schematic configuration view showing one example of a charger of the present invention, and Fig. 2 is a circuit diagram showing one example of a current control circuit used in the charger of the present invention. Fig. 3 and Fig. 4 are assembly perspective view and longitudinal cross-sectional view, respectively, showing one example of a unit cell used in the charger of the present invention.

As shown in Fig. 1, the charger of the present invention includes fuel supply means 10 for supplying fuel, a fuel cell FC for generating and outputting electricity by fuel supplied from the fuel supply means 10, and an output section 30 for outputting power for charging. In the present embodiment, a case using the fuel supply means 10 employing hydrogen generating agent 11 and the fuel cell FC of hydrogen supply type is shown.

The charger of the present invention has features in including, in such a charger, a direct current (DC) voltage conversion circuit 20 for converting an output voltage from the fuel cell FC into a predetermined voltage and outputting the converted voltage, the output section 30 electrically connected with the output of the DC voltage conversion circuit 20 in order to output power for charging, a current control means (current control circuit 40 in the example of Fig. 1) for controlling the output current from the output section 30 so as not to exceed a set current value, and set current alteration means 60 for varying the set current value of the current control means such that the variation pattern of fuel consumption approaches the variation pattern of fuel supply to the fuel cell FC.
In the present embodiment, an example where the output section 30 is electrically connected to one output of the DC voltage conversion circuit 20, and the current control circuit 40, interposed between the other output of the DC voltage conversion circuit 20 and the output section 30, for controlling the output current from the output section 30 so as not to exceed a set current value is arranged as current control means is shown.

The DC voltage conversion circuit 20 is also referred to as a DC-DC converter, and is a circuit for converting to a DC input voltage and outputting a direct current of larger voltage. In the present invention, a step-up converter using a step-up circuit is preferably used especially when configuring a compact charger.

The principle of the step-up circuit is to create current change by ON/OFF of the input power with respect to a coil, continuously create the raised amount of voltage corresponding thereto in an oscillation circuit and retrieving the same as output. Thus, the step-up converter includes the oscillation circuit and the power circuit, and additionally includes an output voltage adjustment circuit, a secondary filter, an external clock synchronization circuit, and the like as necessary.

Various step-up converter integrated circuits (packages) are commercially available, and the DC voltage conversion circuit 20 of the present invention can be configured with recommended standard circuit configuration. In the present embodiment, the DC voltage conversion circuit 20 which adjusts the output voltage constant even when the input voltage varies is particularly preferable. That is, the fuel cell FC has a property in that the output voltage increases as the output current lowers, and thus the DC voltage conversion circuit 20 which adjusts the output voltage to constant even if the input voltage varies is preferable from the standpoint of maintaining the output voltage of the DC voltage conversion circuit 20 even when the output current lowers and the voltage increase.

The DC voltage conversion circuit 20 generally has inputs VIN+, VIN-; outputs OUT+, OUT-, a ground GND, and the like. The inputs VIN+, VIN- of the DC voltage conversion circuit 20 are connected to electrodes 2, 3 of the fuel cell FC, the output OUT+ is connected to + side terminal 31 of the output section 30 and a power supply V+ of the current control circuit 40, and the output OUT- is grounded and connected to a control input 45 of the current control circuit 40.

The output voltage from the DC voltage conversion circuit 20 is determined by the type of equipment to be charged, battery to be incorporated, and the like. For example, the output voltage of around 5 V is used in the case of a portable telephone incorporating a lithium secondary battery having an output of 3.7 V. The input voltage with respect to the DC voltage conversion circuit 20 can be determined by the characteristic and the number of fuel cell FC, but the input voltage of 2 V to 4 V is preferable in terms of stable operation and efficiency of the DC voltage conversion circuit 20 in the case of the output voltage of around 5 V.

The current control circuit 40 controls the output current of the output section 30 so as not to exceed the set current value, and generally uses a current control element 41 such as a transistor (include FET). When using the current control element 41 such as transistor, the current of the current control element 41 is controlled by the base input voltage etc., but the output current can be controlled so as not to exceed a predetermined current value by arranging feedback circuit (generally known as a protective circuit) in which the base input voltage etc. lowers when the relevant current exceeds a constant value.

Such a feedback circuit can be configured with only passive parts, but preferably uses active parts such as transistor and operational amplifier. Furthermore, the current control circuit 40 using operational amplifier is preferable in performing a more reliable control.

As shown in Fig. 2, the current control circuit 40 of the present invention preferably includes the current control element 41 connected in series between the other output of the DC voltage conversion circuit 20 and the output section 30, and compares a detection voltage that varies according to the current flowing to the current control element 41 and a reference voltage that becomes a reference, and controls the current flowing to the current control element 41 to smaller than or equal to the set current value by the input signal corresponding to a voltage difference. In this case, the input signal corresponding to the voltage difference is preferably amplified using an operational amplifier 44.

In the illustrated example, the detection voltage that varies according to the current flowing to the current control element 41 is generated by a resistor 42 arranged between the current control element 41 and the output OUT- of the DC voltage conversion circuit 20, and such a detection voltage is input to the - side input of the operational amplifier 44. The reference voltage that becomes a reference is generated by a series of constant voltage circuits including a variable resistor 43, and input to the + side input of the operational amplifier 44.

The input signal corresponding to the voltage difference in this case greatly changes the base input voltage etc. of the current control element 41 such as transistor by the amplifying function of the operational amplifier 44. Thus, when the current of the resistor 42 that becomes the same as the current of the output section 30 exceeds a constant value, the voltage difference input to the operational amplifier 44 becomes small, the output voltage, that is, the base input voltage etc. of the current control element 41 greatly lowers, and the current flowing to the current control element 41 also lowers. The output current in the output section 30 can be thereby controlled so as not to exceed the set current value.

As shown in Fig. 2, the constant voltage circuit has a configuration of retrieving the voltage of a constant voltage diode D connected in series to a resistor R1 as a predetermined voltage in the variable resistor 43 connected in series to resistors R2 and R3. The operational amplifier 44 requires power supply, and connects the ground and the output OUT+ of the DC voltage conversion circuit 20.

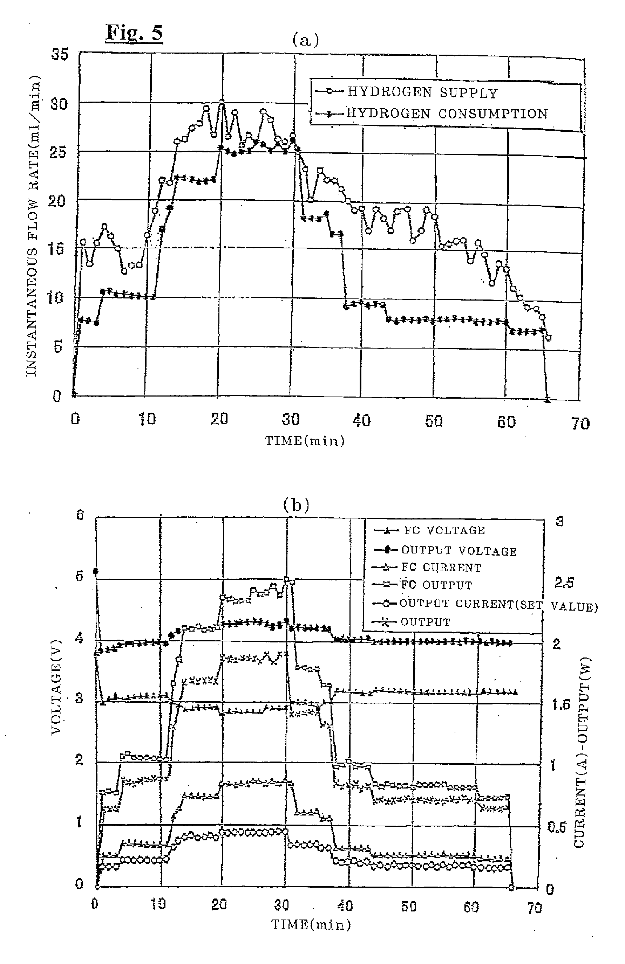

The set current alteration means 60 varies the set current value of the current control circuit 40 such that the variation pattern of fuel consumption approaches the variation pattern of fuel supply to the fuel cell FC. Fig. 5(a) shows the variation pattern of the fuel supply to the fuel cell FC and the variation pattern of the fuel consumption, where the variation pattern of the consumption approaches the variation pattern of the supply by varying the set current value of the current control circuit 40 by the set current alteration means 60.

In other words, in the present invention, instead of controlling the set current value to a constant (i.e., constant fuel consumption), the set current alteration means 60 performs a control of varying the set current value of the current control circuit 40. This includes the control of varying the set current value, where if it is the direction in which the variation pattern of consumption approaches the variation pattern of supply, it corresponds to the set current alteration means 60 of the present invention.

When varying the set current value of the current control circuit 40 by the set current alteration means 60, a method using a variation pattern determined in advance, a method using a feedback control and/or feed-forward control, and the like are used, but any method may be used. The variation pattern of the consumption is preferably controlled to within a range of 50 % to 100 % with respect to the variation pattern of the supply, and is more preferably controlled to within a range of 70 % to 100 %.

As for the method using the variation pattern determined in advance, a method of predicting the variation pattern of the fuel supply to the fuel cell, and using the variation pattern of the current value corresponding thereto (case of Fig. 5(a)) is effective. In this case, the set current alteration means 60 varies the set current value of the current control circuit 40 based on the variation pattern of the current value which varies with time determined in advance. The simplest form is to vary the set current value by timer control.

When performing feedback control, a method of detecting a fuel discharge from the fuel cell FC, a method of detecting pressure inside the fuel cell FC, a method of detecting the voltage of the unit cell of the final stage of the fuel cell FC, or the like may be used. When performing feed-forward control, a method of detecting the fuel supply to the fuel cell FC may be used.

The method of varying the set current value of the current control circuit 40 by the set current alteration means 60 includes a method of mechanically varying the variable resistor 43 of the current control circuit 40, but an electronic circuit for varying the reference voltage to be input to the operational amplifier 44 is preferably used. That is, since the reference voltage corresponding to the set current value is determined from the circuit characteristic of the current control circuit 40, miniaturization, lower cost, and the like of the apparatus can be achieved by using the electronic circuit.

When using an electronic circuit, a method of generating a reference voltage corresponding to the variation pattern of the current value by the sequence control using a programmable microcomputer is effective. When performing feedback control and the like, an additional control parameter is preferably added when performing feedback control using the programmable microcomputer from the standpoint of matching control delay and the like.

Specifically, a control of sampling (detecting) the voltages of the unit cell of the final stage and the unit cell of the pre-stage of the fuel cell FC for every constant time (e.g., every 0.25 seconds), parameterizing increase and decrease in voltage in the plural samplings, and increasing and decreasing (e.g., varying the set current value by -10 mA in the above-described condition and +10 mA in other conditions) the set current value according to the determination of the conditional equation (when the voltage of the pre-stage is maintained and the voltage of the final stage is lowered) of the parameter; a control of resuming the determination by the conditional equation after a constant time (e.g., 0.5 seconds) to reflect the control delay parameter; and the like are considered.

The output current in the output section 30 is determined according to the output voltage, the capacity (determined by effective area etc.), the power characteristic, and the like of the fuel cell FC. For instance, when the capacity of the fuel cell FC of hydrogen supply type is about 3W in the case of charging a portable telephone incorporating a lithium secondary battery of 3.7 V output, the set current value is preferably varied in a range the output current at the output section 30 does not exceed 0.6 A. In the case of a fuel cell FC of direct methanol type etc., the capacity thereof becomes smaller, and thus the threshold value is preferably set within a range of a smaller current value.

As shown in Fig. 3 and Fig. 4, the fuel cell FC of hydrogen supply type preferably includes singular or plural unit cell formed by a plate-shaped solid polymer electrolyte 1, a cathode side electrode plate 2 arranged on one side of the solid polymer electrolyte 1, an anode side electrode plate 3 arranged on the other side, an oxygen containing gas supply part for supplying oxygen containing gas to the cathode side electrode plate 2, and a hydrogen gas flow-path part for supplying hydrogen gas to the anode side electrode plate 3.

In the present embodiment, an example using the unit cell where a flow-path groove 9 of hydrogen gas is formed in an anode side metal plate 5 through etching thereby configuring the hydrogen gas flow-path part, and an opening 4c for naturally supplying air is formed in a cathode side metal plate 4 thereby configuring the oxygen containing gas supply part is illustrated, as shown in Fig. 3 and Fig. 4. As the gas supply part is configured by the metal plates 4, 5, the fuel cell can be thinned and made to lighter weight.

The solid polymer electrolyte 1 may be of any type that is used in the conventional solid polymer membrane battery, but a positive ion exchange membrane consisting of perfluorocarbon copolymer having sulfonic acid group, which is an ultra strong acid, is suitably used in view of chemical stability and conductivity. Nafion (registered trademark) is suitably used for the positive ion exchange membrane.

Other types include that having Nafion and other ion conduction substance immersed in porous membrane consisting of fluorocarbon resin such as polytetrafluoroethylene, that having Nafion and other ion conduction substance supported on a porous membrane or non-woven cloth consisting of polyolefin resin such as polyethylene and polypropylene.

The thickness of the solid polymer electrolyte 1 is effective to the entire thinning the thinner it is, where 10 µm to 300 µm is usable in view of ion conduction function, strength, handling ability, and the like, but is preferably 25 µm to 50 µm.

The electrode plates 2, 3 exhibit functions serving as gas diffusion layer, and that which can supply/discharge fuel gas, oxidation gas, and water vapor and at the same time exhibit the function of collecting electricity can be used. The electrode plates 2, 3 may be the same or may be different, where a catalyst having electro-catalysis is preferably supported at the base material. The catalyst is preferably at least supported at inner surfaces 2b, 3b contacting the solid polymer electrolyte 1.

The electrode base material may be fiber carbon such as carbon paper, carbon fiber non-woven cloth and the like, and conductive porous material such as aggregate of conductive polymer fiber. Generally, the electrode plates 2, 3 are obtained by adding water repellent substance such as fluorocarbon resin to such a conductive porous material, and when supporting the catalyst, they are obtained by mixing the catalyst such as platinum fine particles and water repellant substance such as fluorocarbon resin, mixing the solvent thereto and forming it to paste form or ink form, and thereafter applying to one side of the electrode base material to be faced with the solid polymer electrolyte membrane.

Generally, the electrode plates 2, 3 and the solid polymer electrolyte 1 are designed according to the reducing gas and the oxidation gas supplied to the fuel cell. In the present invention, oxygen containing gas such as air and pure oxygen is used for the oxidation gas and hydrogen gas is used for the reducing gas (fuel). In the present invention, water is generated by the reaction between oxygen and hydrogen ions at the cathode side electrode plate 2 on the side the air is naturally supplied, and thus design is preferably made to correspond to such a electrode reaction.

The hydrogen gas to be supplied to the fuel cell 24 preferably has purity of higher than or equal to 95 % of hydrogen gas, more preferably higher than or equal to 99 %, and most preferably higher than or equal to 99.9 % from reasons of stably, continuously, and efficiently generating electricity while reducing the discharge of the hydrogen gas.

At least one type of metal selected from platinum, palladium, ruthenium, rhodium, silver, nickel, iron, copper, cobalt, and molybdenum, or an oxide thereof may be used for the catalyst, and that in which such a catalyst is supported in advance in carbon black and the like may also be used.

The thickness of the electrode plates 2, 3 is effective to the entire thinning the thinner it is, but is preferably 50 to 500µm in view of electrode reaction, strength, and handling ability.

The electrode plates 2, 3 and the solid polymer electrolyte 1 may be stacked and integrated by performing adhesion, fusion and the like in advance, but may be simply stacked and arranged. Such a stacked body is available as a membrane electrode assembly (MEA), which may be used.

In the present embodiment, the cathode side metal plate 4 is arranged on the surface of the cathode side electrode plate 2, and the anode side metal plate 5 is arranged on the surface of the anode side electrode plate 3. The anode side electrode plate 5 is formed with an injection port 5c and a discharge port 5d of the hydrogen gas, and the flow-path groove 9 is formed in between.

In the present invention, a diffusion suppression mechanism for suppressing diffusion of moisture to the outside from the cathode side is preferably arranged in the oxygen containing gas supply part. In the present embodiment, an opening 4c for naturally supplying oxygen in air is formed in the cathode side metal plate 4, which corresponds to a diffusion suppression plate serving as the diffusion suppression mechanism, and air is naturally supplied through the diffusion suppression plate.

The opening 4c is preferably formed in the cathode side metal plate 4, which is the diffusion suppression plate, at an opening rate of 10 % to 30 % with respect to the area of the cathode side electrode plate 2. With such an opening rate, any number, shape, size, forming position, and the like of the opening 4c may be adopted as long as it is within the range of such an opening rate. As long as it is within the range of such an opening rate, power collection from the cathode side electrode plate 2 can be sufficiently carried out. The opening 4c of the cathode side metal plate 4 may have a plurality of circular holes, slits, and the like formed orderly or at random.

Any metal may be used for the metal plates 4, 5 as long as it does not have an adverse affect on the electrode reaction, and may be stainless plate, nickel, copper, copper alloy, and the like. However, stainless plate, nickel, and the like are preferable in terms of stretching property, weight, elasticity, strength, resistance to corrosion, press working, etching, and the like. A noble metal plating such as gold plating is preferably performed on the metal plates 4, 5 to reduce the contact resistance with the electrode plates 2, 3.

The flow-path groove 9 formed in the anode side metal plate 5 may be a planar shape or a cross-sectional shape as long as a flow-path of hydrogen gas etc. can be formed through contact with the electrode plate 3. However, a vertical groove 9a parallel to one side of the metal plate 5 and a horizontal groove 9b perpendicular to it are preferably mainly formed in view of the flow-path density, stacking density in stacking, bendability, and the like. In the present embodiment, the flow-path density and the flow-path length are balanced such that a plurality of (three in the figure) vertical grooves 9a is connected in series to the horizontal groove 9b.

One part (e.g., horizontal groove 9b) of such a flow-path groove 9 of the metal plate 5 may be formed on the outer surface of the electrode plate 3. A method of forming the flow-path groove on the outer surface of the electrode plate 3 may be a mechanical method such as hot press and cutting, but is preferably groove worked by laser irradiation in view of suitably carrying out microfabrication, An aggregate of fiber carbons is preferable for the base material of the electrode plates 2, 3 from the standpoint of laser irradiation.

The injection port 5c and the discharge port 5d communicating to the flow-path groove 9 of the metal plate 5 may be formed in singular or in plurals. The thickness of the metal plates 4, 5 is effective to the entire thinning the thinner it is, but is preferably between 0.1 mm and 1 mm in view of strength, stretching property, weight, elasticity, handling ability, and the like.

Etching is preferable as a method of forming the flow-path groove 9 in the metal plate 5 in terms of precision and easiness in processing. The flow-path rove 9 formed by etching preferably has a width of 0.1 mm to 10 mm and a depth of 0.05 mm to 1 mm. The cross-sectional shape of the flow-path groove 9 is preferably substantially a square, substantially a trapezoid, substantially a semicircle, a V-shape, and the like.

Etching is preferably used for the formation of the opening 4c in the metal plate 4, thinning of the peripheral part of the metal plates 4, 5, and the formation of the injection port 5c etc. in the metal plate 5.

Etching can be carried out using an etchant corresponding to the type of metal plates 4, 5 after forming an etching resist of a predetermined shape on the metal surface using a dry film resist and the like. The cross-sectional shape of the flow-path groove 9 can be controlled at higher accuracy by selectively performing etching for every metal using a stacked plate of two or more types of metals.

The embodiment shown in Fig. 4 is an example where the thickness of the caulked part (outer edge) of the metal plates 4, 5 is thinned by etching. The sealing by caulking can be more easily carried out by etching the caulked part to an appropriate thickness. From this standpoint, the thickness of the caulked part is preferably between 0.05 mm to 0.3 mm.

In the present invention, any formed structure of the flow-path part etc. may be adopted as long as the oxygen containing gas supply part for supplying oxygen containing gas to the cathode side electrode plate 2 and the hydrogen gas flow-path part for supplying hydrogen gas to the anode side electrode plate 3 are formed. When forming the flow-path part etc. in the metal plates 4, 5, the peripheral edge of the metal plates 4, 5 is preferably sealed by folding machine while being electrically insulated. An example of sealing by caulking is shown in the present embodiment.

The electrical insulation can be obtained by interposing an insulation material 6 or the peripheral edge of the solid polymer electrolyte 1, or both. When using the insulation material 6, the thickness thereof is preferably smaller than or equal to 0.1 mm from the standpoint of thinning. Further thinning is possible (e.g., thickness of 1 µm of the insulation material 6 is also possible) by coating the insulation material.

Sheet-form resin, rubber, thermoplastic elastomer, ceramics, and the like can be used for the insulation material 6, but resin, rubber, thermoplastic elastomer, and the like are preferable in terms of enhancing sealing property, and in particular, polypropylene, polyethylene, polyester, fluorocarbon resin, and polyimide are preferable. The insulation material 6 may be integrated to the metal plates 4, 5 in advance by being attached or applied directly or through adhesive to the peripheral edge of the metal plates 4, 5.

The caulking structure is preferably as shown in Fig. 2 from the standpoint of sealing property, easiness in manufacturing, thickness, and the like. That is, a caulking structure in which the outer edge 5a of the metal plate 5 is formed larger than the other outer edge 4a, and the outer edge 5a of one metal plate 5 is folded back so as to sandwich the outer edge 4a of the other metal plate 4 while interposing the insulation material 6 is preferable. In such a caulking structure, a step is preferably formed in the outer edge 4a of the metal plate 4 by press working and the like. Such a caulking structure itself is known as a metal processing, and can be formed by a known caulking device.

In the present invention, the fuel cell FC can be configured using one or plural unit cells as described above. In such a fuel cell FC, the respective unit cells are normally connected in series electrically, but may be connected in parallel prioritizing the current value.

When using the unit cell, a hydrogen gas supply tube may be joined directly to the injection port 5c and the discharge port 5d of the hydrogen gas of the metal plate 5, but a tube joint 5e with a pipe 5f having small thickness and being parallel to the surface of the metal plate 5 is preferably arranged as shown in Fig. 4 in thinning the fuel cell.

The fuel supply means 10 of the present invention may be of any type as long as the fuel of the fuel cell FC can be supplied, and various fuel supply means 10 are selected according to the type of fuel cell FC. For instance, in the case of fuel cell FC of hydrogen supply type, fuel supply means using hydrogen generating agent and hydrogen storing alloy are adopted, where the fuel supply means may be a pressure containing storing hydrogen. The fuel supply means 10 are configured by a liquid supply system, a flow rate control system, and the like in the direct methanol type, and a reformer and the like is further added in the methanol reforming type.

In the present invention, when configuring a compact charger, a combination of the fuel supply means 10 using the hydrogen generating agent and the fuel cell FC of hydrogen supply type is particularly preferable. In the present embodiment, an example of the fuel supply means 10 using the hydrogen generating agent 11 is shown.

As shown in Fig. 1, for example, the fuel supply means 10 of the present embodiment may include a reaction container 12 for storing the hydrogen generating agent 11 for generating hydrogen gas by reacting with a reaction liquid 14 such as water, and a supply part 13 of the reaction liquid 14. A supply side adjustment mechanism for adjusting the supply of the hydrogen gas to the fuel cell FC may also be arranged.

A liquid storing part 15 may be arranged in the supply part 13 of the reaction liquid 14, or the reaction liquid 14 such as water may be directly supplied to the reaction container 12. If the liquid storing part 15 is arranged, a water injection port may be formed, so that water is additionally supplied according to the consumption of water. The liquid storing part 15 may include a fiber aggregate or a porous body, so that water is held at a predetermined portion by capillary phenomenon. A pressure feeding means for transferring the reaction liquid 14 of the liquid storing part 15 may be arranged in the supply part of the reaction liquid 14.

The hydrogen gas generating means, which are the fuel supply means 10, may include the hydrogen generating agent 11 and the like for generating hydrogen gas by reacting with moisture (water or water vapor) in the reaction container 12, so that hydrogen gas is supplied to the fuel cell FC. Heating means are arranged when the reaction of the hydrogen generating agent I 1 requires heating.

The hydrogen generating agent 11 is preferably a metal particle for generating hydrogen by reacting with moisture, and includes one or more types of metal particle selected from Fe, Al, Mg, Zn, Si, and the like, or metal particles in which such metal particles are partially oxidized. The hydrogen gas can be generated at a lower temperature by adding metal catalyst etc. that promotes oxidizing reaction. Furthermore, hydrogenated metal such as MgH₂ may be used alone or along with the above. The hydrogen generating agent 11 can be filled in the reaction container 12 as metal particles, but a porous body bonded with metal particles may be used.

The hydrogen gas which hydrogen composition is substantially 100 % (exclude moisture) can be generated by such hydrogen gas generating means. The hydrogen gas generating cell and the fuel cell FC are coupled by a hydrogen supply conduit, and the generated hydrogen gas (H₂) is supplied to the anode side space of the unit cell of the fuel cell FC.

As shown in Fig. 1, for example, the charger of the present invention can be used to charge a portable telephone 50 incorporating a lithium ion secondary battery 53. The charging can be carried out on various secondary batteries and large capacity capacitors etc., and for example, can be performed on the secondary battery such as a lithium ion secondary battery, nickel-cadmium secondary battery, and nickel-hydrogen secondary battery.

Generally, as shown in Fig. 1, the portable telephone 50 has a configuration of charging a lithium ion secondary battery 53 and the like through a charger circuit 2, where power from the output section 30 is supplied to the portable telephone 50 through a connector 51. The charger circuit 52 of the portable telephone 50 is expected to have an input of constant voltage/constant current such as the AC adapter, and thus charging in constant current and constant voltage is performed in the first half of the charging and charging in constant voltage is performed in the second half by connecting the charger of the present invention (see Fig. 5). In this case, voltage/current controlled by the charger circuit 52 is applied to the lithium ion secondary battery 53, and the like.

The charger circuit 52 is generally a circuit for changing the charging voltage according to the secondary battery 53, and the like.

The charger of the present invention can be configured to a portable type as fuel supply does not need to be particularly controlled, and the secondary battery can be suitably charged with a simple device, and overload to the fuel cell is less likely to occur, and thus, and in particular, can be suitably used in charging a mobile equipment such as portable telephone, notebook PC, and the like.

### Examples

Examples etc. specifically describing the configurations and the effects of the present invention will be described below.

### Example 1

A groove (width of 0.8 mm, depth of 0.2 mm, interval of 1.6 mm, and number of twenty-one),a peripheral caulking part, and a gas introduction and discharge hole were formed in an SUS (50 mm × 26 mm × 0.3 mm thickness) having corrosion resistance property by etching with ferric chloride aqueous solution to obtain an anode side metal plate. Similarly, a pass-through hole (0.6 mmφ), pitch of 1.5 mm, number of 357, and opening rate of contacting region of 13 %), peripheral caulking part, and gas introduction and discharge hole were formed in an SUS (50 mm × 26 mm × 0.3 mm thickness) having corrosion resistance property by etching with ferric chloride aqueous solution to obtain a cathode side metal plate. An insulation sheet (50 mm × 26 mm × 2 mm width, thickness of 80µm) was joined to the SUS.

A membrane electrode assembly (49.3 mm × 25.3 mm) was formed in the following manner. 20 % platinum supporting carbon catalyst (EC-20-PTC) manufactured by US Electrochem Co. was used for the platinum catalyst. The platinum catalyst, the carbon black (Ketjen black EC manufactured by Akzo co.), polyvinylidene fluoride (Kynar) were mixed at a ratio of 75 % by weight, 15 % by weight, and 10 % by weight, dimethylformamide was mixed to the mixture of the platinum catalyst, the carbon black, and the polyvinylidene fluoride at a ratio of obtaining a polyvinylidene solution of 2.5 % by weight, and the mixture was then dissolved and mixed in a mortar to obtain a catalyst paste.
A carbon paper (TGP-H-90 manufactured by Toray Co., thickness of 370 µm) was cut to 20 mm × 43 mm, about 20 mg of the catalyst paste obtained as above was then applied thereon with a spatula, and dried in a hot air circulating dryer of 80 °C. The carbon paper supporting 4 mg of catalyst composition was thereby formed. The platinum supporting amount was 0.6 mg/cm².

Using the platinum catalyst supporting carbon paper obtained as above and the Nafion film (Nafion 112 manufactured by Dupon, 25.3 mm × 49.3 mm, thickness of 50µm) for the solid polymer electrolyte (positive ion exchange membrane), hot press was performed for two minutes under a condition of 135 °C and 2 MPa using a die. The membrane electrode assembly obtained in such a manner was then sandwiched in the middle between two SUS plates, and caulked as shown in Fig. 4 to obtain a thin and compact micro-fuel cell having an outer dimension of 50 mm × 26 mm × thickness of 1.4 mm. With this as a unit cell, four such unit cells were connected in series (gas and electricity) thereby configuring a fuel cell.

The hydrogen gas supply means was then connected to the unit cell of the first stage of the fuel cell, and the hydrogen gas was supplied in the following manner. An amount of 2.8 g of hydrogen generating agent (weight ratio of 1/0.23/0.015) consisting of aluminum powder (manufactured by Kojundo Co.: average particle diameter 3 µm), carbon black (manufactured by Cabot Co.: Vulcan XC-72R, average particle diameter 20 nm), and calcium oxide (Wako-chem A-12112, powder reagent) was placed in a reaction container, water was supplied through a water absorbing paper to generate hydrogen gas, and then supplied to the fuel cell.

Furthermore, the output of the fuel cell was input to a DC voltage conversion circuit (output 5.5 V) configured using a step-up (DC/DC) converter (using MAX1708EEE manufactured by MAXIM Co.), and the output current from the output section was controlled so as not to exceed the set current value by the current control circuit (Fig. 2, operational amplifier is LM7301IM5 manufactured by NS Co.) interposed to one of the outputs.
Here, as a set current alteration means, the reference voltage corresponding to the variation pattern of the current value shown in Fig. 5(b) was generated and input to the operational amplifier to vary the set current value by the sequence control using a programmable microcomputer. The output section was connected with the portable telephone incorporating a lithium ion secondary battery (capacity 800 mA·h) of 3.7 V by way of a connector, and charging was performed through the charger circuit.

In this case, the voltage, the current, and the output power of the fuel cell, and the output voltage, and the output current (set current value) of the output section were measured, where the results are as shown in Fig. 5(b). The hydrogen supply and the hydrogen consumption in charging are shown in Fig. 5(a).

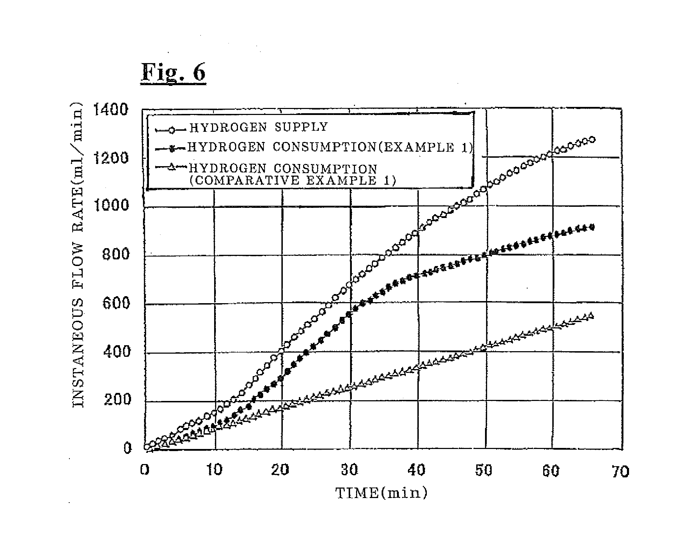

According to the result of Fig. 5(b), the output current of the fuel cell varied according to variation in the set current value, and the output from the output section is also varied. As shown in Fig. 5(a), the hydrogen supply varies, but the hydrogen consumption varies so as to approach the hydrogen supply. The hydrogen consumption/hydrogen supply becomes the utilization ratio of fuel, where the utilization ratio of about 70 % is obtained as shown in Fig. 6. Thus, even if the hydrogen supply varies, this can be responded and a special control related to supply of hydrogen gas can be omitted.

### Comparative Example 1

Charging by generation of electricity of the fuel cell was performed similar to Example 1 other than that the set current alteration means was not arranged and that the output current of the output section was controlled to a constant (0.16 A) by the current control circuit in Example 1. As a result, only the utilization ratio of lower than or equal to 50 % was obtained, as shown in Fig. 6.

### Comparative Example 2

Charging by generation of electricity of the fuel cell was performed similar to Example 1 other than that charging was performed by the output of the DC/DC converter so that the output power is the same using a resistor without passing through the current control circuit (no set current alteration means) in Example 1. As a result, the output current of the fuel cell rose to 4 A at the initial stage of charging and the fuel cell reached the overload state, and thus charging was immediately stopped.

### Another embodiment of set current alteration means

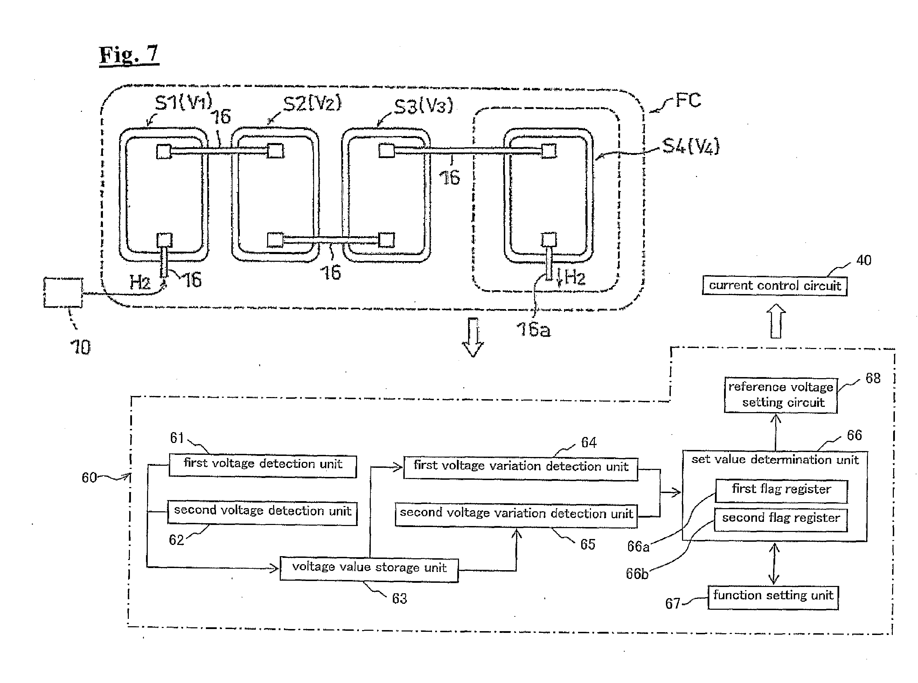

Another embodiment of the set current alteration means 60 will now be described with a frame format view of Fig. 7. The control described here is one example of the previously described feedback control. In this embodiment, the fuel cell FC is configured by four of the same unit cells S1 to S4. Four unit cells S1 to S4 are electrically connected in series, where output voltages of each unit cell S1 to S4 are represented as V1 to V4 and the output voltage for the fuel cell FC becomes Vt = V1+V2+V3+V4. The output voltage Vt becomes the input voltage to the DC voltage conversion circuit 20. The number of unit cells configuring the fuel cell FC is not particularly limited and does not need to be four.

The hydrogen gas or the fuel supplied from the fuel supply means 10 is supplied to each unit cell S1 to S4 by a pipe 16. The fuel passages coupled by the pipe 16 are coupled in series, where the hydrogen gas is supplied in order from the unit cell S1 on the upstream side (initial stage) to the unit cell S4 of the final stage on the downstream side. The hydrogen gas reaching the unit cell S4 of the final stage is discharged to the outside from a pipe 16a. The amount of hydrogen gas to be discharged is preferably as small as possible.

Specific functions of the set current alteration means 60 will be described below. A first voltage detection unit 61 detects the output voltage V4 of the unit cell S4 of the final stage. A second voltage detection unit 62 detects output voltages V 1 to V3 of the unit cells S1 to S3 other than the final stage. The voltage detected here may be a total voltage of the three unit cells S1 to S3, or may be an average value.
Description will be made below as average value Va = (Vt-V4)/3. The sampling period in detection is set to 0.5 seconds, but the period can be arbitrarily set. The detection voltage values Va, V4 are temporarily stored in a voltage value storage unit 63. The stored data is data at four sampling points including the most recent data, and the old data are appropriately erased.

A first voltage variation detection unit 64 detects temporal variation of the output voltage V4 of the unit cell S4 of the final stage. Specifically, temporal variation is detected based on four data of most recent data V4 (0s), data V4 (-0.5 s) 0.5 seconds before, data V4 (-1s) one second before, and data V4 (-1.5 s) 1.5 seconds before. The data at adjacent sampling points are compared, and -1 is set as the variation value if in the decreasing direction, 1 is set if in the increasing direction, and 0 is set if not increasing nor decreasing.
Three variation values are obtained since there are four sampling points, and the sum of the variation value is obtained as a flag value. The flag value takes one of - 3, -2, -1, 0, 1, 2, 3. This value is stored in a first flag register 66a. The period the first voltage variation detection unit 64 calculates such flag data is also 0.5 seconds, same as the above-described sampling period. The number of sampling points is arbitrary.

A second voltage variation detection unit 65 similarly detects temporal variation of the average voltage value Va of the three unit cells S1 to S3. Specifically, temporal variation is detected based on four data of most recent data Va (0s), data Va (-0.5s) 0.5 seconds before, data Va (-1s) one second before, and data Va (-1.5s) 1.5 seconds before. Similar to the first voltage variation detection unit 64, the sum of the variation value is stored in a second flag register 66b as a flag value.

The unit cell S4 of the final stage and the other unit cells S 1 to S3 are separated for the following reason. The hydrogen gas is supplied in order from the unit cell S1 of the initial stage in each unit cell S1 to S4 of the fuel cell FC, and thus lack of supply of hydrogen gas most likely occurs in the unit cell S4 of the final stage. Therefore, the output voltage of the unit cell S4 of the final stage is detected alone and the temporal variation is monitored.
The voltage of the unit cell S4 of the final stage is preferably monitored to monitor the variation degree in the fuel supply to the fuel cell in satisfactory precision. With respect to the unit cells S1 to S3 other than the unit cell of the final stage, lack of supply of hydrogen gas is less likely to occur, and the average value of such output voltages merely needs to be monitored.

A set value determination unit 66 determines the set current value of the current control circuit 40 based on the degree of the temporal variation of the first and second voltages. Specifically, the adjustment value is determined based on the flag value stored in the first and second flag registers 66a, 66b and the function set in a function setting unit 67. This will be specifically described using Table 1, Table 2, and Table 3. The control in determining the adjustment value is performed in the following manner. Each table is a measurement example showing the transition of the current values Va (mV), V4 (mV), the respective flag value, the set current (mA), the input current (mA), and the output current (mA) detected in the sampling period. The set current corresponds to the set value of the current flowing between the emitter and the collector of the current control element 41 in Fig. 2, and the input current indicates the result of measuring the actually flowing current between the emitter and the collector. The output current is obtained by measuring the current flowing from the fuel cell FC to the DC voltage conversion circuit 20.

**Table 1**

| No | Va (mV) | FLAG | V4 (mV) | FLAG | DETERMINATION | SET CURRENT (mA) | INPUT CURRENT (mA) | OUTPUT CURRENT (mA) |
|---|---|---|---|---|---|---|---|---|
| 1 | 660 | 0 | 695 | 1 | U | 338 | 336 | 759 |
| 2 | 656 | 0 | 693 | 0 | | 338 | 337 | 751 |
| 3 | 658 | 0 | 694 | 1 | | 338 | 337 | 761 |
| 4 | 657 | -1 | 694 | 1 | | 338 | 339 | 763 |
| 5 | 658 | 1 | 693 | 0 | U | 341 | 337 | 753 |
| 6 | 655 | -1 | 693 | 0 | | 341 | 342 | 758 |
| 7 | 656 | 1 | 693 | 0 | | 341 | 341 | 774 |
| 8 | 654 | -1 | 692 | -1 | | 341 | 340 | 768 |
| 9 | 652 | -1 | 692 | -1 | U | 344 | 341 | 759 |

**Table 2**

| No | Va (mV) | FLAG | V4 (mV) | FLAG | DETERMINATION | SET CURRENT (mA) | INPUT CURRENT (mA) | OUTPUT CURRENT (mA) |
|---|---|---|---|---|---|---|---|---|
| 1 | 621 | -1 | 675 | -1 | U | 401 | 408 | 954 |
| 2 | 621 | 0 | 674 | 0 | | 401 | 410 | 967 |
| 3 | 624 | 2 | 673 | -1 | | 401 | 412 | 954 |
| 4 | 619 | 0 | 673 | -1 | | 401 | 409 | 957 |
| 5 | 619 | 0 | 672 | -2 | D | 399 | 412 | 967 |
| 6 | 623 | 0 | 672 | 0 | | 399 | 408 | 951 |
| 7 | 621 | 0 | 676 | 1 | | 399 | 411 | 964 |
| 8 | 623 | 1 | 673 | 0 | | 399 | 411 | 952 |
| 9 | 624 | 1 | 673 | 0 | U | 402 | 408 | 948 |

**Table 3**

| No | Va (mV) | FLAG | V4 (mV) | FLAG | DETERMINATION | SET CURRENT (mA) | INPUT CURRENT (mA) | OUTPUT CURRENT (mA) |
|---|---|---|---|---|---|---|---|---|
| 1 | 579 | 1 | 630 | -1 | U | 453 | 468 | 1192 |
| 2 | 574 | -1 | 624 | 0 | | 453 | 473 | 1201 |
| 3 | 569 | -1 | 623 | -1 | | 453 | 473 | 1211 |
| 4 | 570 | -1 | 611 | -2 | L | 437 | 473 | 1223 |
| 5 | 596 | 1 | 641 | 0 | | 437 | 454 | 1129 |
| 6 | 608 | 3 | 648 | 1 | | 437 | 453 | 1101 |
| 7 | 606 | 1 | 651 | 2 | | 437 | 453 | 1088 |
| 8 | 604 | -1 | 654 | 3 | | 437 | 455 | 1092 |
| 9 | 607 | -1 | 657 | 3 | | 437 | 454 | 1096 |
| 10 | 606 | -1 | 665 | 3 | | 437 | 454 | 1092 |
| 11 | 607 | 1 | 662 | 1 | U | 438 | 452 | 1088 |

(A) First, the adjustment of the set current value is not performed when output current is not flowing.

(B) The set current value is controlled to 80 mA when the current voltage value V4 (0s) of the unit cell S4 of the final stage becomes lower than or equal to 480 mV. This is performed as an emergency measure when the voltage drops to a very small voltage.

(C) The set current value is controlled so as to be raised using a function A when Va is in a stable trend (when flag value is -1, 0, 1) and V4 is also in a stable trend (when flag value is -1, 0, 1). The function will be hereinafter described. The control by the function A is expressed in the determination of "U" in the table.

(D) The set current value is controlled so as to be decreased using a function B when V4 is in a downward trend (when flag value is -2, -3) and the voltage difference of V4 between the adjacent sampling points is greater than -3(mV). The control by the function B is expressed in the determination of "D" in the table.

(E) The set current value is controlled so as to be decreased using a function C when the voltage difference of V4 between the adjacent sampling points is smaller than or equal to -3(mV), that is, when the voltage of the unit cell V4 of the final stage suddenly lowers. The control by the function C is expressed in the determination of "L" in the table.

(F) The adjustment on the set current value is not performed when none of the above conditions are met. This corresponds to when the determination column is a blank column in the table.

The configurations of the functions A, B, and C show Table 4,Table 5, and Table 6.

**Table 4**

| FUNCTION A | |
|---|---|
| CURRENT SET CURRENT VALUE (mA) | ADJUSTMENT VALUE (mA) |
| SMALLER THAN 140 mA | 10 |
| 140 mA~240 mA | 5 |
| 240 mA~320 mA | 4 |
| 320 mA~400 mA | 3 |
| GREATER THAN OR EQUAL TO 400 mA | 2 |

As shown in Table 4, the function A has the function determined such that the adjustment value is determined in correspondence to the magnitude of the current set current value. The magnitude of the set current value is divided into five stages, and the adjustment value is set larger the smaller the set current value. This is to obtain a steady state as fast as possible at the stage the voltage value is increased to become the steady state such as at the rise of the fuel cell FC.

Looking at the data of No. 5 in Table 1, the current voltage value is Va = 658, V4 = 693. With respect to the flag value of Va, No. 2 → No. 3 increase (+1), No. 3 → No. 4 decrease (-1), and Neo. 4 → No. 5 increase (+1), and thus flag value = 1-1+1 = 1. With respect to the flag value of V4, No, 2 → No. 3 increase (+1), No. 3 → No. 4 no increase or decrease (0), and No. 4 → No. 5 decrease (-1), and thus flag value = 1+0-1 = 0. Therefore, Va and V4 are both in the stable trend (determination U), and the above-described condition (C) is satisfied and thus the control by the function A is performed, Since the set current value at immediately before No. 5 is 338 mA, the adjustment value becomes an increase of 3 mA from Table 4. Therefore, the set current value at the time point of No. 5 is changed from 338 mA to 341 mA.

**Table 5**

| FUNCTION B | |
|---|---|
| CURRENT SET CURRENT VALUE (mA) | ADJUSTMENT VALUE (mA) |
| SMALLER THAN 140 mA | -10 |
| 140 mA~240 mA | -5 |
| 240 mA~320 mA | -4 |
| 320 mA~400 mA | -3 |
| GREATER THAN OR EQUAL TO 400 mA | -2 |

The function B is shown on Table 5, where the function is determined such that the adjustment value is determined in accordance with the magnitude of the current set current value, similar to function A. The magnitude of the set current value is divided into five stages, and the adjustment value is set larger the smaller the set current value. The reason therefor is to respond to the efficiency of the DC voltage conversion circuit 20.

Looking at the data of No. 5 in Table 2, the flag value of Va is 0 and the flag value of V4 is -2, and V4 is in a downward trend. The difference is -1 mV with respect to V4 = 673 immediately before V4 = 672 at the present point, which is larger than - 3 mV (determination D). Therefore, the above-described condition (D) is satisfied and the control by the function B is performed. Since the set current value at immediately before No. 5 is 401 mA, the adjustment value becomes a decrease of 2 mA from Table 5. Therefore, the set current value at the time point of No. 5 is changed from 401 mA to 399 mA.

**Table 6**

| FUNCTION C | |
|---|---|
| VOLTAGE DIFFERENCE OF V4 (mA) | ADJUSTMENT VALUE (mA) |
| 3 mV~4 mV | -5 |
| 5 mV~6 mV | -10 |
| 7 mV~14 mV | -15 |
| 15 mV~49 mV | -30 |
| GREATER THAN OR EQUAL TO 50 mV | -50 |

The function C is shown on Table 6, where the function is determined such that the adjustment value is determined in accordance with the magnitude of the voltage difference of the voltage value V4 of the unit cell S4 of the final stage at the current point and the voltage value at the sampling point of immediately before. The function is determined such that the adjustment value becomes larger the larger the voltage difference. This is to suppress overload on the unit cell S4 of the final stage by greatly decreasing the set current value the larger the degree of lowering of the voltage.

Looking at the data of No. 4 in Table 3, the voltage value is V4 = 611 mV, and is lowered by 12 mV (lowered by greater than or equal to 3 mV) with respect to the voltage value of V4 = 623 mV immediately before (determination L). Therefore, the above-described condition (E) is met and the control by the function C is performed. The adjustment value when the voltage difference is 12 mV is 15 mA from Table 6. The set current value immediately before is 453 mA and is 437 mA after adjustment.

In the present embodiment, each function A, B, and C is provided in the form of a table (lookup table), but is not limited thereto in the present invention, and may be calculated using relational expression.

It is apparent that the input current changes in a similar trend in correspondence to the variation in the actual set current value in tables 1, 2, and 3. The control is performed such that the maximum adjustment value of the voltage value is 500 mA, the maximum adjustment value of the current is 80 mA, and the minimum voltage value of the unit cell is 480 mV.

A reference voltage setting circuit 68 is an electronic circuit for setting the reference voltage so as to become the set current value determined by the set value determination unit 66. That is, the reference voltage corresponding to the magnitude of the set current value can be set, and the reference voltage to be input to the operational amplifier 44 of the current control circuit 40 of Fig. 2 can be adjusted, so that the setting of the set current value can be altered.

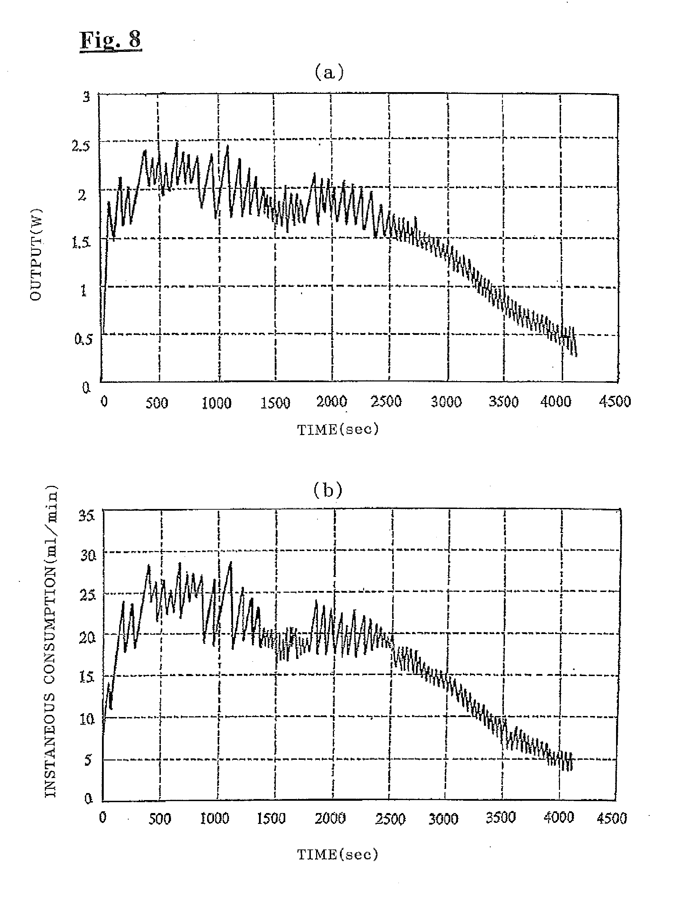

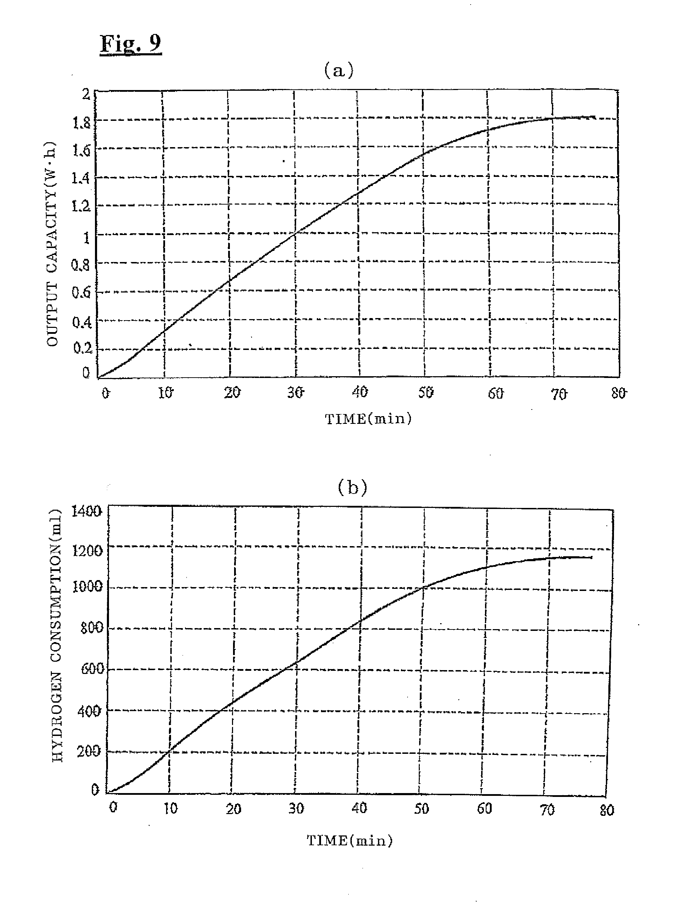

Fig. 8 is a graph showing temporal transition of instantaneous hydrogen gas consumption and fuel cell output when feedback control by the configuration of Fig. 7 is performed. According to such graphs, hydrogen gas corresponding to the output is consumed, and hydrogen gas is not unnecessarily discharged. Fig. 9 is a graph showing temporal transition of hydrogen consumption and output capacity. As apparent from this graph as well, the consumption of hydrogen gas varies in correspondence to variation in output capacity. Furthermore, the hydrogen consumption with respect to total hydrogen generation amount of 1200ml is 1150ml, and thus the consumed rate is significantly high or 95 %. Therefore, the hydrogen gas is effectively consumed without being a waste.

### Another embodiment of current control means

In the embodiment described above, an example where the current control means is configured by the current control circuit 40 interposed between the other output of the DC voltage conversion circuit 20 and the output section 30 has been described, but the current control means of the present invention may perform current control on the DC voltage conversion circuit 20.

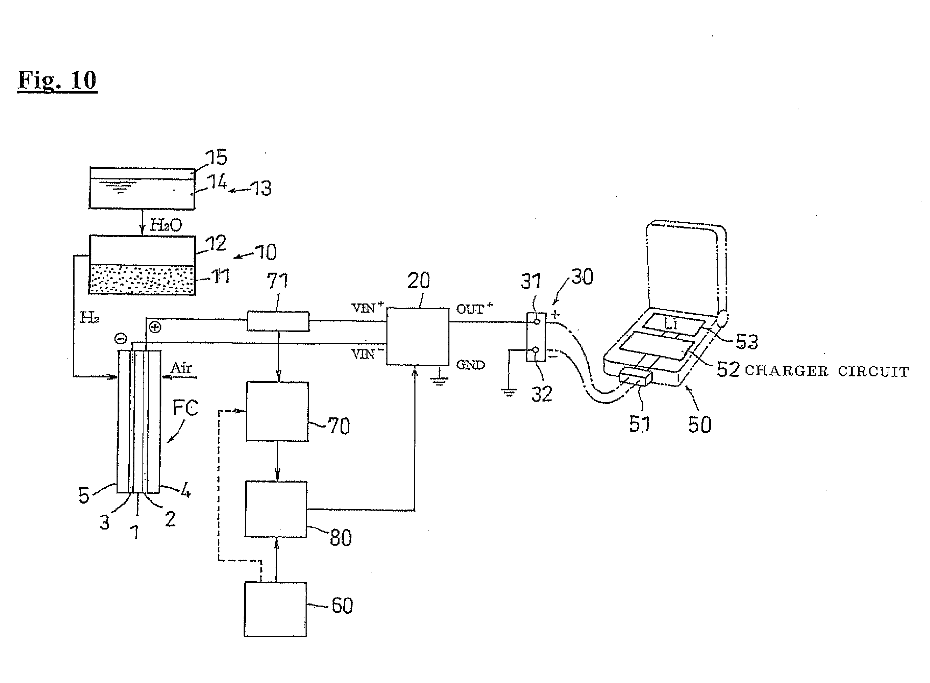

For instance, as in the embodiment shown in Fig. 10, the current on the input side of the DC voltage conversion circuit 20 may be detected, and control may be performed on the DC voltage conversion circuit 20 so that the output current from the output section 30 does not exceed the set current value. In this case, the relationship between the current on the input side of the DC voltage conversion circuit 20 and the output current from the output section 30 is obtained in advance, so that the latter current can be indirectly controlled by detecting the former current.
When detecting the current (output current from the fuel cell FC) on the input side of the DC voltage conversion circuit 20, the control may be performed on the DC voltage conversion circuit 20 or the above-described current control circuit 40 so that the output current from the fuel cell FC does not exceed the set current value.

In the embodiment shown in Fig. 10, a current detection unit 70 for detecting the current value of a current detection element 71 arranged between the DC voltage conversion circuit 20 and the fuel cell FC, and an output current control means 80 for controlling the output current of the DC voltage conversion circuit 20 so as not to exceed the set current value according to the detection result in the current detection unit 70 are arranged.

The current detection element 71 may be a resistor arranged between the DC voltage conversion circuit 20 and the fuel cell FC. According to such a resistor, the detection voltage that changes according to the current flowing to the DC voltage conversion circuit 20 is generated, and the detection voltage is detected by the current detection unit 70 using operational amplifier and the like.

In the output current control means 80, the control signal for the DC voltage conversion circuit 20 is generated, and when the DC voltage conversion circuit 20 has a feedback input for voltage adjustment, the control signal from the output current control means 80 is input to the relevant feedback input.

In this embodiment, the DC voltage conversion circuit 20 preferably has a variable output voltage, and has a feedback input for output voltage adjustment. The control signal from the output current control means 80 is input to the feedback input as a control voltage, so that the output voltage of the DC voltage conversion circuit 20 can be adjusted, and the charging current output from the DC voltage conversion circuit 20 can be controlled so as not to exceed the set current value by such a voltage adjustment.

The set current value in the output current control means 80 is not controlled to be constant (i.e., constant fuel consumption), but the control of varying the set current value of the output current control means 80 is performed by the set current alteration means 60. In this case, the signal from the set current alteration means 60 varies the set current value of the output current control means 80, and control is made in a direction in which the variation pattern of the consumption approaches the variation pattern of the fuel supply (e.g., hydrogen).

The set current value of the current control means 80 can be varied by inputting the signal from the set current alteration means 60 to the current detection unit 70 (signal path shown with dotted line in the figure).

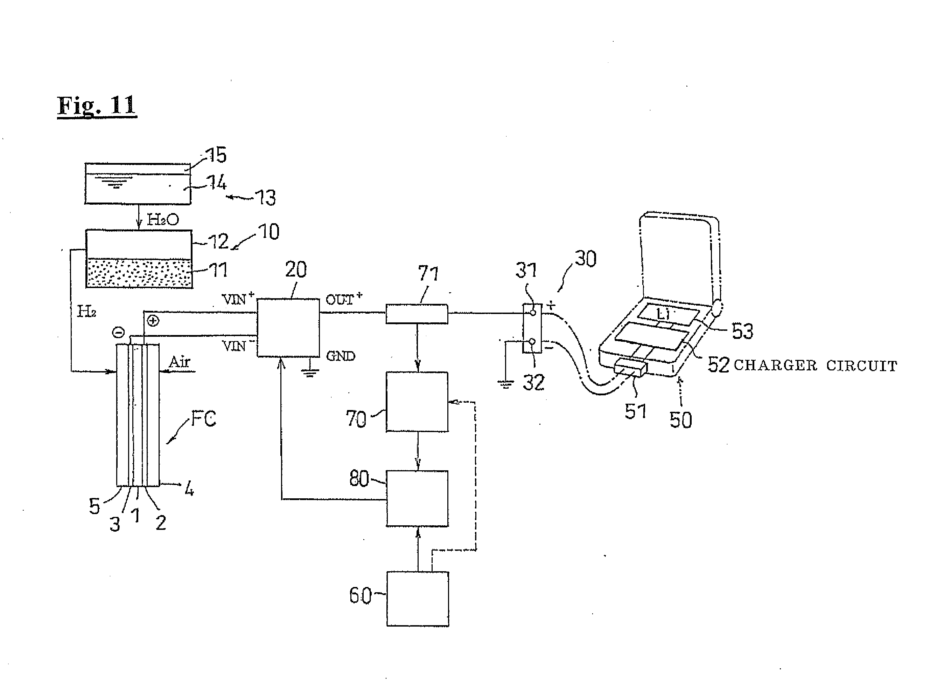

As in the embodiment shown in Fig. 11, for example, the current on the output side of the DC voltage conversion circuit 20 may be detected and the control may be performed on the DC voltage conversion circuit 20 so that the output current from the output section 30 does not exceed the set current value.

In the embodiment, the current detection unit 70 for detecting the current value of the current detection element 71 arranged between the DC voltage conversion circuit 20 and the output section 30, and the output current control means 80 for controlling the output current of the DC voltage conversion circuit 20 so as not to exceed the set current value according to the detection result of the current detection unit 70 are arranged.

The current detection element 71, the current detection unit 70, the output current control means 80, and the like are the same as the embodiment shown in Fig. 10. That is, the charging current output from the DC voltage conversion circuit 20 is controlled so as not to exceed the set current value by inputting the control signal from the output current control means 80 to the DC voltage conversion circuit 20. In addition, the set current value of the output current control means 80 is varied by the set current alteration means 60, so that control is made in a direction in which the variation pattern of the consumption approaches the variation pattern of the fuel supply (e.g., hydrogen).

### Other embodiments

(1) In the above-described embodiment, an example using the fuel cell of hydrogen supply type is shown, but any fuel cell FC capable of generating electricity by fuel can be used for the fuel cell FC used in the present invention, and may be methanol reforming type, direct methanol type, carbon hydride supply type, and the like. Various fuel cells using other fuels are also known, and any one may be adopted.

(2) In the above-described embodiment, an example of arranging the diffusion suppression plate (metal plate) formed with an opening at a constant opening rate with respect to the area of the cathode side electrode plate on the surface of the cathode side electrode plate, and forming the oxygen containing gas supply part has been described, but the oxygen containing gas supply part may be configured by a flow-path groove of the oxygen containing gas similar to the anode side. In this case, similar to the anode side metal plate, the flow-path groove, the injection port and the discharge port of the oxygen containing gas such as air are formed by etching or press working, and electricity is generated while supplying air and the like from the injection port of the cathode side metal plate similar to the anode side metal plate. In this case, a method of suppressing diffusion of moisture to the outside from the cathode side includes a method of supplying oxygen containing gas containing moisture.

(3) In the above-described embodiment, an example of arranging the metal plate on the surface of the cathode side electrode plate and the anode side electrode plate and forming the oxygen containing gas supply part and the hydrogen gas flow-path part has been described, but other materials and various separators used from the prior art can be used in place of the metal plate.

Furthermore, an example of forming the flow-path groove in the anode side metal plate by etching has been described in the above-described embodiment, but the flow-path groove may be formed in the anode side metal plate by mechanical method such as press working or cutting in the present invention.

(4) In the above-described embodiment, an example where the hydrogen gas generating cell or the hydrogen gas supply means is integrally configured in the charger has been described, but the hydrogen gas generating cell and the like may be removably attached to the charger. In this case, the hydrogen gas generating cell includes a coupling conduit to the hydrogen gas supply tube.

(5) In the above-described embodiment, an example of charging the portable telephone has been described, but the charger may be used in charging mobile equipments such as notebook PC, PDA, and the like. In this case as well, the output voltage of the DC voltage conversion circuit is set so that the voltage (e.g., 12 V) required for charging is output from the output section. The threshold value of the current to be controlled may be set within a range of higher current value (e.g., lower than or equal to 0.8 A) in view of charging efficiency and the like.

In the case of the mobile equipment having large power consumption compared to the portable telephone, it is more efficient to have larger output of the fuel cell, which can be responded by increasing the number of fuel cells to be connected in series.

(6) In the above-described embodiment, an example of charging the secondary battery through the charger circuit has been described, but since the output current is controlled so as not to exceed the set value in the charger of the present invention, the secondary battery and the like can be directly charged using the same. In this case, the voltage of 100 to 120 % is set for the output voltage of the DC voltage conversion circuit with respect to the output voltage after full charging of the secondary battery. The threshold value of the output current is set to smaller than or equal to 300 to 500 mA.

## Claims

1. A charger comprising:
- fuel supply means for supplying fuel;
- a fuel cell for generating and outputting electricity by the fuel supplied from the fuel supply means;
- a DC voltage conversion circuit for converting an output voltage of the fuel cell to a predetermined voltage, and outputting the converted voltage;
- an output section connected electrically with an output of the DC voltage conversion circuit to output power for charging;
- current control means for controlling an output current from the output section or the fuel cell so as not to exceed a set current value; and
- set current alteration means for varying the set current value of the current control means such that a variation pattern of fuel consumption approaches a variation pattern of fuel supply to the fuel cell.

2. A charger comprising:
- fuel supply means for supplying fuel;
- a fuel cell for generating and outputting electricity by the fuel supplied from the fuel supply means;
- a DC voltage conversion circuit for converting an output voltage of the fuel cell to a predetermined voltage, and outputting the converted voltage;
- an output section connected electrically with one output of the DC voltage conversion circuit to output power for charging;
- a current control circuit, interposed between the other output of the DC voltage conversion circuit and the output section, for controlling an output current from the output section so as not to exceed a set current value; and
- set current alteration means for varying the set current value of the current control means such that a variation pattern of fuel consumption approaches a variation pattern of fuel supply to the fuel cell.

3. The charger according to claim 1 or 2,
wherein the set current alteration means vary the set current value of the current control circuit based on the variation pattern of the current value that varies with time defined in advance.

4. The charger according to claim 1 or 2,
wherein the fuel cell has a plurality of unit cells electrically connected in series and passages for the fuel supplied from the fuel supply means connected in series; and
wherein the set current alteration means include:
- a first voltage detection unit for detecting a first voltage of a unit cell of a final stage positioned at a most downstream side of the fuel passage;
- a second voltage detection unit for detecting a second voltage of the remaining unit cells other than the unit cell of the final stage;
- a first voltage variation detection unit for detecting temporal variation of the first voltage;
- a second voltage variation detection unit for detecting temporal variation of the second voltage; and
- a set value determination unit for determining the set current vale of the current control means or the current control circuit based on a degree of the temporal variations of the first voltage and the second voltage.

5. The charger according to claim 4,
wherein the first voltage, the second voltage, and the temporal variations thereof are provided so that detection is carried out by a predetermined sampling period; and wherein the first and second voltage variation detection units detect a degree of downward trend and a degree of upward trend of the voltage value from a current voltage value and voltage values at a plurality of past sampling points; and wherein the set value determination unit determines an adjustment value with respect to the current set current value according to an extent of the degree.

6. The charger according to claim 5, further comprising:
a function setting unit for setting a function for determining the adjustment value; wherein
the function determines the adjustment value with the current set current value as an input variable.

7. The charger according to any one of claims 2 to 6,
wherein the current control circuit includes a current control element connected in series between the other output of the DC voltage conversion circuit and the output section, compares the detection voltage that varies according to the current flowing to the current control element and a reference voltage that becomes a reference, and controls the current flowing to the current control element to smaller than or equal to a set current value by an input signal corresponding to a voltage difference.

8. The charger according to claim 1,
wherein the current control means detect the current on an input side or an output side of the DC voltage conversion circuit, and input the detected current to a voltage adjustment feedback input of the DC voltage conversion circuit to control the output current from the output section so as not to exceed the set current value.

9. The charger according to any one of claims 1 to 8,
wherein the fuel supply means supply hydrogen gas as fuel, and the fuel cell generates electricity by hydrogen gas and lowers the hydrogen gas consumption when the output current lowers.
